# EUROPÄISCHE PATENTSCHRIFT

(11) **EP 0 833 982 B1**
(45) Veröffentlichungstag und Bekanntmachung des Hinweises auf die Patenterteilung: **04.08.1999**
(21) Anmeldenummer: 96918582.6
(22) Anmeldetag: 04.06.1996
(51) Int. Cl.: D21G 1/02, F16C 13/00

(54) **DURCHBIEGUNGSSTEUERBARE WALZE**
ROLLER WITH CONTROLLABLE DEFLECTION
CYLINDRE A FLEXION CONTROLEE

(30) Priorität: 16.06.1995 DE 19521860
(43) Veröffentlichungstag der Anmeldung: 08.04.1998
(73) Patentinhaber: Eduard Küsters Maschinenfabrik GmbH & Co. KG, 47805 Krefeld (DE)
(72) Erfinder: KÜSTERS, Karl-Heinz, D-47804 Krefeld (DE); MARK, Wolfgang, D-40570 Meerbusch (DE)
(74) Vertreter: Palgen, Peter, Dipl.-Phys. Dr.
(86) Internationale Anmeldenummer: DE9600978
(87) Internationale Veröffentlichungsnummer: WO9700355

(56) Entgegenhaltungen:
- EP-A- 0 434 645
- DE-B- 2 847 029
- DE-U- 9 211 162
- DE-U- 9 314 568
- FR-A- 2 297 683
- GB-A- 1 059 366

## Beschreibung

Die Erfindung bezieht sich auf eine Walze der dem Oberbegriff des Anspruchs 1 entsprechenden Art.

Bei derartigen Walzen sind meist etwa zwanzig bis achtzig Stützelemente über die Länge verteilt in einer Reihe üblicherweise auf der Seite des Walzspalts angeordnet, die nach Art von Kolben/Zylindereinheiten ausgebildet sind und gegen den Innenumfang der Hohlwalze anliegen, wobei in der Anlagefläche Lagertaschen ausgebildet sind, die einen hydrostatischen Druck gegen den Innenumfang der Hohlwalze ausüben und aus denen Druckflüssigkeit ständig über die Berandung der Lagertaschen abströmt, so daß ein tragfähiger Flüssigkeitsfilm aufrechterhalten wird, der eine metallische Berührung zwischen dem Stützelement und dem Innenumfang der Hohlwalze unterbindet.

Im Betrieb müssen diese Stützelemente mit mindestens einem fluiden Druckmedium versorgt werden. Meist handelt es sich dabei um eine Druckflüssigkeit, insbesondere ein Drucköl, welches unter Umständen auch als Wärmeträgermedium dient. Gas-, insbesondere luftbetriebene Stützelemente sind aber nicht ausgeschlossen.

Beispiele derartiger Walzen sind in den folgenden Schriften wiedergegeben: US-A-3119324, DE 22 30 139 B2, US-A-2395915, DE 36 40 902 C2, DE 38 20 974 C2.

Die Stützelemente werden in vielen Fällen zu mehreren zu Gruppen zusammengefaßt, die einen gemeinsamen Druck des fluiden Druckmediums erhalten und somit nur einer einzelnen Versorgungsleitung bedürfen. Je kleiner die Gruppen sind, desto mehr Versorgungsleitungen müssen vorhanden sein. Wenn im Extremfall jedes Stützelement separat beaufschlagt werden soll, um die Linienkraft besonders feinfühlig beeinflussen zu können, müssen mindestens ebensoviele Versorgungsleitungen wie Stützelemente vorhanden sein. Da die Versorgungsleitungen einen Mindestquerschnitt nicht unterschreiten können, weil die Stützelemente zu ihrem einwandfreien Betrieb, insbesondere zur Aufrechterhaltung des trennenden Flüssigkeitsfilms eine gewisse Durchsatzmenge benötigen, bedeutet die Heranführung des Druckmediums zu den einzelnen Stützelementen oder Gruppen derselben ein Problem, weil nur ein sehr begrenzter Querschnitt dafür zur Verfügung steht. Das Querhaupt, welches sich unter der durch die Linienkraft gegebenen Streckenlast im Innern der Hohlwalze durchbiegt, darf in seinem tragenden Querschnitt nur unwesentlich geschwächt werden, wenn die Walze höhere Liniendrücke erzeugen können soll.

Eine erste Möglichkeit zur Versorgung der Stützelemente ist Gegenstand der DE 24 07 510 B2, bei der an der Stelle jedes Stützelements ein Steuerventil vorgesehen ist, mittels welchem auf aus der durch einen zentralen Hauptkanal herangeführten Druckflüssigkeit durch Minderung ein für jedes Stützelement angepaßter Betätigungsdruck gebildet wird. Das jeweilige Ventil wird z.B. pneumatisch fernbetätigt. Es sind also auch wieder entsprechend viele Fernbetätigungsleitungen unterzubringen. Die Anordnung einer Vielzahl von Ventilen ist aufwendig, und die Schwächung des Querschnitts ist nicht unbeträchtlich. Besonders aber ist nachteilig, daß die Ventile in der Walze sitzen, so daß bei einer Störung auch nur eines Ventils die ganze Walze demontiert werden muß.

Bei anderen Ausführungsformen ist die Ventilanordnung außerhalb der Walze vorgesehen. In der DE 26 57 061 C2 und der DE 25 50 270 C3 werden eine oder mehrere Zuleitungen dadurch gebildet, daß in der Längsausnehmung des Querhaupts verstellbare Abschottungen vorgesehen sind und der Bereich zwischen den einzelnen Abschottungen durch entsprechende Bohrungen des Querhaupts oder konzentrische Rohranordnungen mit Druckmedium versorgt wird. Dieses wird dann der Gruppe von Stützelementen zugeteilt, deren Zuleitungen in dem Bereich zwischen den betreffenden Abschottungen in die Längsausnehmung münden. Für höhere Zahlen von separat zu versorgenden Stützelementen oder Gruppen derselben, wie z.B. bei der Walze nach dem DE-GM 93 14 568 vorkommen, sind derartige Anordnungen ungeeignet. Insbesondere ist die Trennung an den einzelnen Abschottungen durch die begrenzte Leistungsfähigkeit der Dichtungen, die ja das Einschieben und Herausziehen überstehen müssen, nur für relativ geringe Drücke geeignet.

Dieser Nachteil trifft auch für die dem Oberbegriff des Anspruchs 1 zugrundeliegende Ausführungsform nach der DE 28 47 029 B1 zu, bei der die Zuleitungen in die Bereiche zwischen den einzelnen Abschottungen durch Rohrleitungen gebildet sind. Die Rohrleitungen tragen die Abschottungen. Die Gesamtheit der Rohrleitungen und Abschottungen kann als Einheit aus der Längsausnehmung des Querhaupts herausgezogen werden.

Der Erfindung liegt die Aufgabe zugrunde, eine gattungsgemäße Versorgungseinheit zu schaffen, die für eine größere Zahl von separat zu versorgenden Stützelementen bzw. Gruppen von Stützelementen geeignet ist und auch bei höheren Drücken einsetzbar ist.

Diese Aufgabe wird durch die in Anspruch 1 wiedergegebene Erfindung gelöst. Hierbei werden also nicht mehr Abschnitte der Längsausnehmung durch einer Abdichtung bedürfende Abschottungen unterteilt sondern wird jedes Stützelement bzw. jede Gruppe von Stützelementen direkt mit einer Versorgungsleitung verbunden. Damit sich an jedem der auf der Außenseite des Querhauptes angeordneten Stützelemente eine druckgeschlossene Verbindung ergibt, sind die Verbindungsstücke vorgesehen, die von außen betätigbar sind. Das Druckmedium wird also bis zum Stützelement in einer geschlossenen Leitung geführt, was den Betrieb unter praktisch beliebigen Drücken ermöglicht. Nach dem Lösen sämtlicher Verbindungsstücke kann die Gesamtheit der Versorgungsleitungen als Ganzes aus der Längsausnehmung des Querhaupts herausgezogen werden.

Eine wichtige Ausgestaltung der Erfindung ist der Träger nach Anspruch 2. Dieser stellt gewissermaßen das Rückgrat der Versorgungseinheit dar und hält über die Winkelanschlußstücke die Enden der Versorgungsleitungen in einer festen Position. Außerdem erlaubt der Träger die gleichzeitige Positionierung sämtlicher Anschlußpunkte der Verbindungsstücke, die also von außerhalb des Querhauptes gesetzt werden können, ohne daß von dem schwer zugänglichen Innern des Querhauptes her nachpositioniert werden muß.

Zweckmäßig weist der Träger einen rechteckigen Querschnitt auf, so daß ebene und im rechten Winkel gelegene Bohrungs- und Montageflächen gegeben sind (Anspruch 3).

Eine einfach zu realisierende Ausführungsform der Verbindungsstücke sind längsgebohrte Schrauben, die von der Außenseite des Querhaupts her in Gewindeabschnitte der Querbohrungen in dem Träger eingreifen (Anspruch 4).

Anspruch 5 gibt eine Anordnung der Einmündungen der Versorgungsleitungen in die Anschlußstücke wieder, die eine rationelle Herstellung der Versorgungseinheit wegen gleich angeordneter Bohrungen und gleicher Bauteile zur Folge hat und platzsparend ist. Die Verkröpfung wird gemäß Anspruch 6 in einer vorteilhaften Ausführungsform durch Winkelstücke gebildet, die sämtlich untereinander gleich ausgebildet sein können, wenn die Versorgungsleitungen gemäß Anspruch 7 auf einem Teilkreis angeordnet sind, weil dann der radiale Abstand von den Versorgungsleitungen zur Einmündung bei allen Versorgungsleitungen gleich ist.

Um das Bündel der Versorgungsleitungen, die ja in ihrer Länge der Länge der Walze entsprechen, zu stabilisieren, empfehlen sich Haltescheiben nach Anspruch 8.

Es kann zweckmäßig sein, die Längsausnehmung des Querhaupts an den Enden desselben mittels Deckelplatten zu verschließen (Anspruch 9), die Anschlüsse für die Zu- und Abfuhr von fluidem Medium aufweisen können (Anspruch 10).

Dies wird insbesondere bei einer bestimmten Art von Stützelementen relevant, bei denen ein erstes Druckmedium zur Erzeugung des hydrostatischen Drucks in den Lagertaschen dient und unter Aufrechterhaltung eines tragenden Druckmediumfilms an den Rändern der Lagertaschen ständig über diese Ränder abströmt (DE 38 20 974 C2). Die Anpressung der Stützelemente an den Innenumfang der Hohlwalze und die Einstellung des Anpreßdrucks und damit des Linienkraftverlaufs erfolgen nicht mit diesem Druckmedium, sondern über ein separates Druckmedium, welches in eine geschlossene Zylinderkammer des Stützelements geleitet wird und dort einen hydrostatischen Anpreßdruck ausübt, der in der gewünschten Weise gesteuert werden kann. Die Zufuhr des separaten Druckmediums zu den Zylinderkammern erfordert einen zweiten Zuführweg. Von der durch die mit Anschlüssen versehenen Deckelplatten an den Enden verschlossenen Längskammer führen in einem solchen Fall gemäß Anspruch 11 zusätzliche Radialkanäle zu den Stützelementen, die das Zylinderkammermedium heranführen. Die Längsausnehmung hat in diesem Fall nicht nur die Funktion der Aufnahme der Versorgungsleitungen, sondern auch selbst eine Flüssigkeitsführungsfunktion.

Walze der in Rede stehenden Art können Längen bis zu zehn Meter aufweisen. Ein Bündel relativ dünner Rohrleitungen von solcher Länge kann schwer zu handhaben sein. Aus diesem Grund kann es sich gemäß Anspruch 12 empfehlen, von beiden Enden des Querhauptes her Versorgungseinheiten in die Längsausnehmung des Querhauptes einzuführen, wodurch sich die Handhabungslänge halbiert und sich außerdem die Zahl der in einem bestimmten Querschnitt der Längsausnehmung unterbringbaren separaten Versorgungsleitungen verdoppelt.

In der Zeichnung ist ein Ausführungsbeispiel der Erfindung dargestellt.
Fig. 1a und 1b sind aneinanderzusetzen und zeigen zusammen einen durch die Achse gehenden Längsschnitt durch eine erfindungsgemäße Walze;
Fig. 2 zeigt eine in der Längsachse vertikal geschnittene perspektivische Teilansicht des Querhauptes der Walze mit einer erfindungsgemäßen Versorgungseinheit;
Fig. 3 und 4 zeigen Querschnitte nach den Linien III-III bzw. IV-IV in Fig. 1b in vergrößertem Maßstab;
Fig. 5 zeigt eine vergrößerte Teilansicht eines Winkelanschlußstücks entsprechend dem in Fig. 1b mit V bezeichneten strichpunktiert umrandeten Bereich;
Fig. 6 zeigt eine vergrößerte Ansicht einer Deckelplatte entsprechend dem in Fig. 1a mit VI bezeichneten, strichpunktiert umrandeten Bereich;
Fig. 7 zeigt einen zur Achse der Walze senkrechten Querschnitt durch die Mitte eines einzelnen Stützelements.

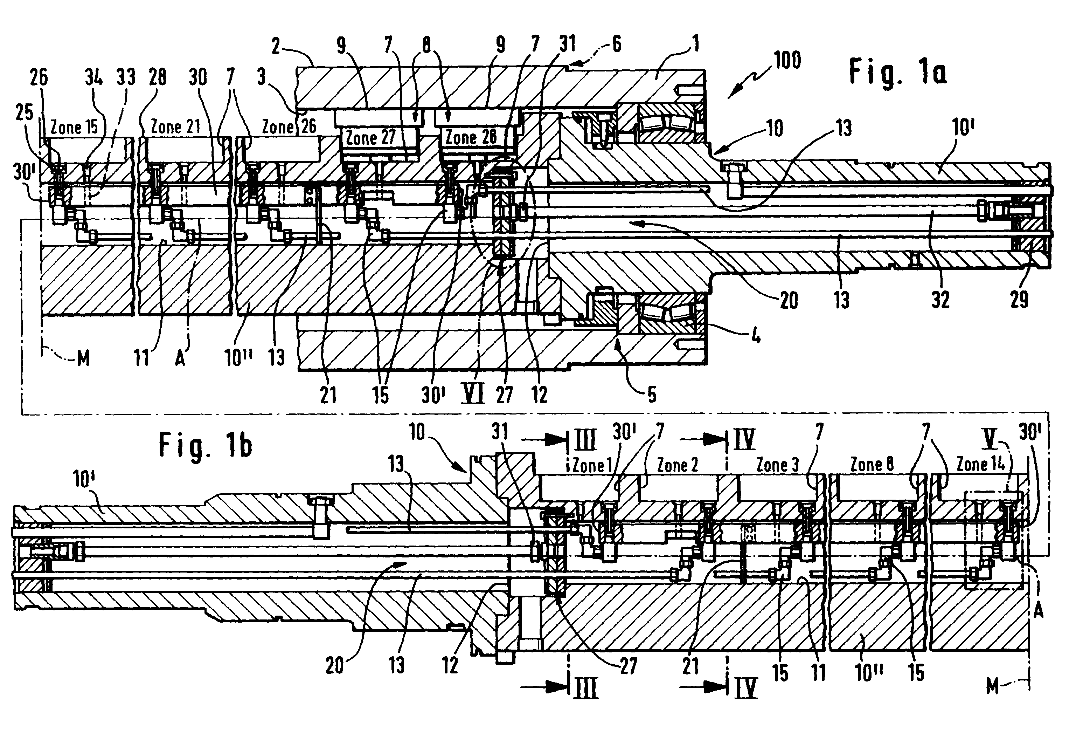

In Fig. 1a/1b als Ganzes mit 100 bezeichnete Walze umfaßt eine umlaufende Hohlwalze 1, deren Außenumfangsfläche den arbeitenden Walzenumfang 2 bildet und die einen glatten geschlossenen zylindrischen Innenumfang 3 aufweist. Die Hohlwalze ist der Länge nach von einem balkenförmigen Querhaupt 10 durchgriffen, welches an den Enden 10' aus der Hohlwalze 1 vorsteht und dort in einem Walzenständer, in den Schwingen eines Kalanders oder in einer ähnlichen Abstützeinrichtung abgestützt ist. Die vorstehenden Enden 10' bilden die Walzenzapfen der Walze 100. In dem Ausführungsbeispiel sind sie als separate Teile hergestellt, die längs einer in der Nähe der Enden der Walze 100 gelegenen Fügefläche 12 mit dem einstückigen Mittelteil 10" des Querhaupts 10 zusammengefügt sind.

Von der Hohlwalze 1 ist nur das in Fig. 1a wiedergegebene rechte Ende gezeichnet; es versteht sich aber, daß sich die Hohlwalze 1 über die gesamte Breite des Arbeitsbereichs erstreckt. An dem in Fig. 1a dargestellten Ende ist die Hohlwalze 1 über Wälzlager 4 auf dem Querhaupt 10 drehgelagert. Innenseitig des Wälzlagers 4 ist eine Gleitringdichtung 5 vorgesehen, die den Austritt von Lecköl aus dem Innern der Hohlwalze 1 axial nach außen verhindert. Auf der Seite des in Fig. 1a oben gelegenen Walzspalts 6 sind in dem Querhaupt 10 zylindrische Ausnehmungen 7 mit zur Achse des Querhaupts 10 radialer Achse vorgesehen, in denen untereinander gleiche Stützelemente 8 nach Art einer Kolben/Zylindereinheit radial beweglich sind, die mit ihrer äußeren, hydrostatische Lagertaschen aufweisenden Anlageflächen 9 gegen den Innenumfang 3 der Hohlwalze 1 anliegen. Den Stützelementen 8 wird in einer noch zu beschreibenden Weise fluides Druckmedium, in dem Ausführungsbeispiel hydraulische Druckflüssigkeit zugeführt. Unter dem Druck dieser Druckflüssigkeit legen sich die Stützelemente 8 gegen den Innenumfang 3 der Hohlwalze 1, drücken diese gemäß Fig. 1a nach oben und bewirken auf diese Weise eine Linienkraft in dem Walzspalt 6. Das Querhaupt 10 biegt sich unter der Gegenkraft der Stützelemente 8 innerhalb der Hohlwalze 1 etwas gemäß Fig. 1a nach unten durch, wozu der ringsum bestehende Abstand erforderlich ist, wenn es nicht zu einer Berührung des Innenumfangs 3 der Hohlwalze 1 und des Querhaupts 10 kommen soll.

In dem gezeichneten Ausführungsbeispiel sind die Stützelemente 8 dicht bei dicht angeordnet. Über die Länge der Walze folgen achtundzwanzig Stützelemente 8 in einer auf der Seite des Walzspalts 6 gelegenen achsparallelen Reihe aufeinander.

Alle achtundzwanzig Stützelemente 8 müssen in dem Ausführungsbeispiel je für sich mit einer separat steuerbaren Druckflüssigkeit für die Lagertaschen versorgt werden. Dies geschieht durch einzelne Versorgungsleitungen 13 in Gestalt von Rohren, die durch eine zentrale Längsausnehmung 11 des Querhaupts 10 herangeführt werden. Die Versorgungsleitungen 13 sind in zwei untereinander gleichen Versorgungseinheiten zusammengefaßt, die in Fig. 1a und 1b jeweils mit 20 bezeichnet sind und sich von dem jeweiligen Ende des Querhaupts 10 bis kurz vor die zur Achse senkrechte Mittelebene M des Querhaupts 10 erstrekken.

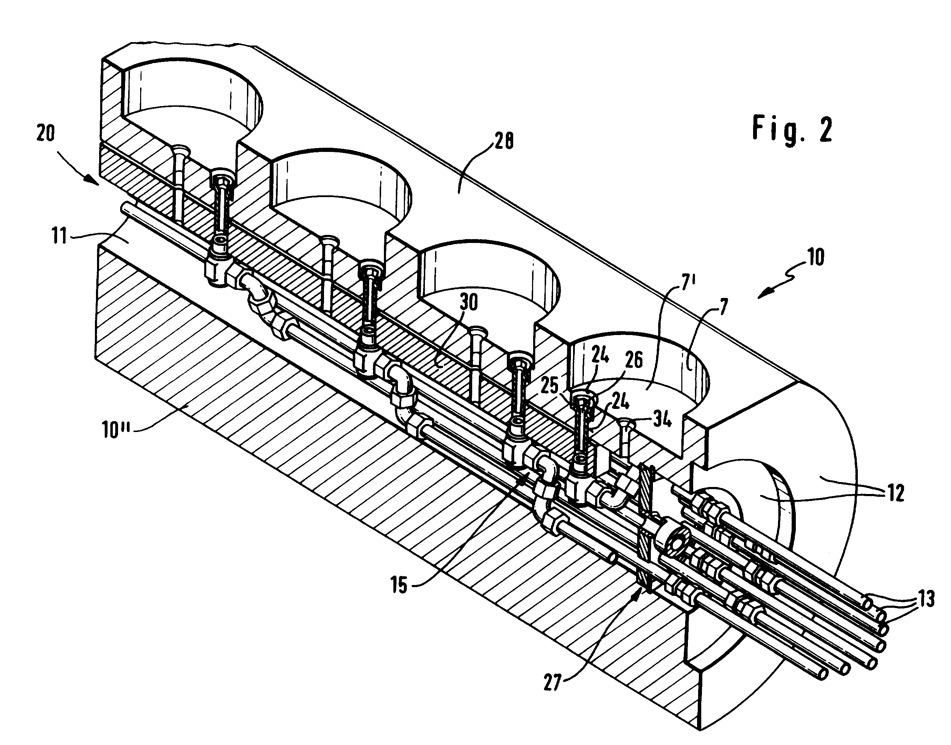

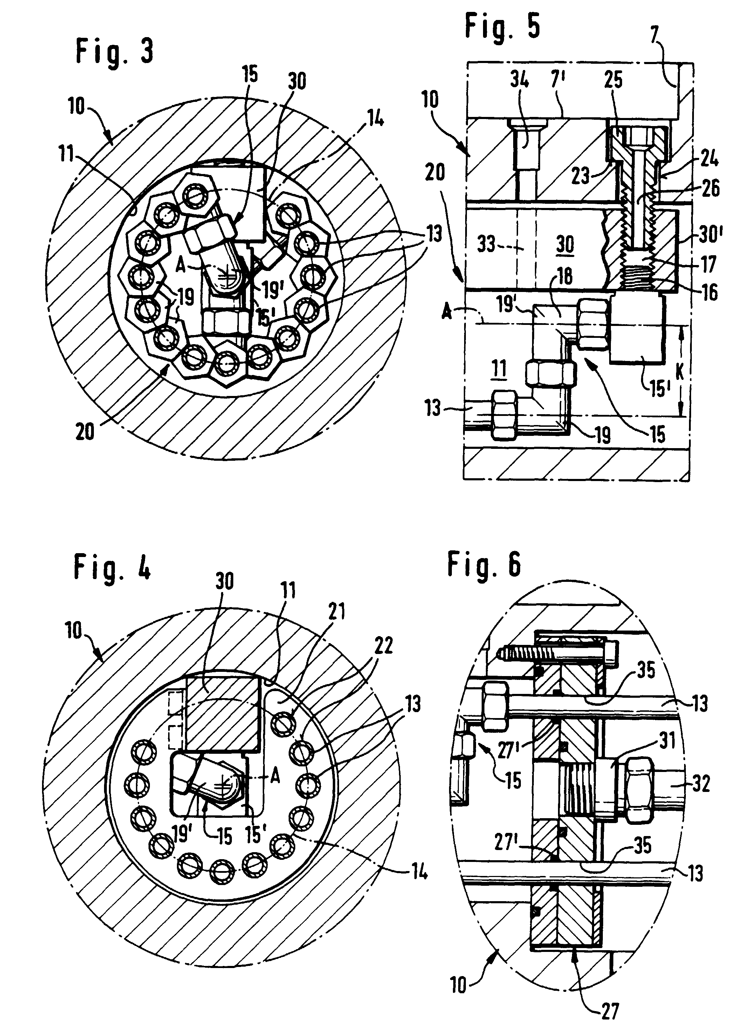

Die einzelnen Versorgungsleitungen 13 sind innerhalb der Längsausnehmung 11 auf einem Teilkreis 14 um die Längsachse A des Querhaupts 10 angeordnet, wie es aus den Fig. 3 und 4 ersichtlich ist. Jede Versorgungsleitung 13 führt bis zu dem ihr zugeordneten Stützelement 8 und mündet dort in ein Winkelanschlußstück 15, welches zwei S-förmig zusammengesetzte einzelne Winkelstücke 19,19' umfaßt und eine Verkröpfung des Leitungsweges um eine Strecke K (Fig. 5), nämlich den Radius des Teilkreises 14, bewirkt. Die Winkelanschlußstücke 15 sind mit einem an dem Endteil 15' vorgesehenen Anschlußzapfen 16 in radiale Bohrungen 17 eines Trägers 30 eingesetzt, der aus einem Profilstab quadratischen Querschnitts besteht, der mit einer Seite an der Oberseite der Längsausnehmung 11 anliegt (Fig. 4) und sich von dem jeweiligen Ende des Mittelteils 10" des Querhaupts 10 bis etwa zu dessen Mitte erstreckt. Der Träger 30 soll einerseits einigermaßen biegesteif sein, andererseits aber nicht zuviel vom Querschnitt der Längsausnehmung 11 wegnehmen. Die größte Querschnittsabmessung des Trägers kann zwischen einem Viertel und der Hälfte des Durchmessers der Längsausnehmung 11 liegen. In dem Ausführungsbeispiel beträgt die Kantenlänge des quadratischen Querschnitts etwa ein Drittel des Durchmessers. Die stirnseitigen Endflächen der beiden Träger 30 sind in den Fig. 1a und 1b mit 30' bezeichnet. Die abgekröpften Endbereiche 18 des Strömungsweges der Versorgungsleitungen 13 in dem jeweiligen Winkelanschlußstück 15 (Fig. 5) liegen sämtlich auf einer gemeinsamen achsparallelen mit der Achse A zusammenfallenden Fluchtlinie, so daß die den Anschluß an den Träger bewirkenden Endteile 15' der Winkelanschlußstücke 15 an dem Träger 30 alle gleich ausgerichtet werden können. Die an dem jeweiligen Endteil 15' angebrachten Winkelstücke 19' stehen, wie aus den Fig. 2 und 3 zu ersehen ist, in einer zur Achse senkrechten Ebene unter verschiedenen Winkeln, um die jeweilige Versorgungsleitung 13 an die die gemeinsame Fluchtlinie bildende Achse A heranzuführen.

Alle Versorgungsleitungen 13 einer Versorgungseinheit 20 sind also durch den Träger 30 miteinander verbunden, der das Rückgrat des von der jeweiligen Vorsorgungseinheit 20 umfaßten Bündels von aus Rohren bestehenden Versorgungsleitungen 13 bildet und deren innere Enden an definierten Stellen positioniert. In zweckentsprechenden Abständen längs des Querhauptes 10 können an den Träger 30 angeschraubte, sich senkrecht zur Achse erstreckende Haltescheiben 21 vorgesehen sein, die Bohrungen 22 zur Hindurchführung der Versorgungsleitungen 13 aufweisen und diese in der richtigen Anordnung abstützen. Der Träger 30 mit den daran befestigten und durch die Haltescheiben 21 fixierten Versorgungsleitungen 13 bildet auf diese Weise eine gut handhabbare balkenförmige bauliche Einheit, nämlich die Versorgungseinheit 20, die als Ganzes vom Ende des Querhaupts 10 her in dieses einschiebbar ist.

Im Boden 7' jeder einzelnen zylindrischen, zur Aufnahme eines Stützelements 8 bestimmten Ausnehmung 7 in der abgeflachten Oberseite 28 des Querhaupts 10 ist eine einen Absatz 23 aufweisende radiale Bohrung 24 angebracht, die mit einer der Bohrungen 17 in dem Träger fluchtet. In die Bohrung 24 ist eine Kopfschraube 25 eingeschraubt, die eine durchgehende Längsbohrung 26 aufweist. Die Schraube 25 legt einerseits den Träger 30 an der oberen Begrenzung der Längsausnehmung 11 fest und bildet andererseits den Strömungsweg für die Druckflüssigkeit, die auf diese Weise aus der Leitung 13 in einem geschlossenen Verlauf in das Innere der Ausnehmung 7 übertreten kann. Da die Bohrungen 17 und 24 in ihrer Lage aufeinander abgestimmt sind, ist, wenn ein Bohrungspaar 17,24 zur Deckung gebracht ist, gleichzeitig auch die richtige Positionierung für alle anderen Bohrungen 17 gefunden. Die mechanisch und strömungsmäßig Verbindungsstücke bildenden Schrauben 25 können in jede einzelne Ausnehmung 7 von außerhalb des Querhaupts 10 eingeschraubt werden solange die Hohlwalze 1 noch nicht aufgeschoben ist.

Die Längsausnehmung 11 in dem Mittelteil 10" des Querhaupts 10 ist an dessen Enden durch Endplatten 27 nach außen verschlossen, durch die die Versorgungsleitungen 13 in entsprechenden Bohrungen 35 (Fig. 6) hindurchgeführt sind. Die Endplatten 27 sind Doppelplatten, damit auf den einander zugewandten Seiten der einzelnen Platten an den Rändern der Bohrungen 35 Dichtungen 27' angebracht werden können. Die Versorgungsleitungen 13 gehen nach außen hin durch die Endstücke 10' des Querhaupts 10 hindurch und treten an einem von ihnen durchsetzten äußeren Abschlußblock 29 zutage.

An den Endplatten 27 sind Anschlüsse 31 für Druckflüssigkeit vorgesehen, durch die die Längsausnehmung 11 mit Druckflüssigkeit füllbar ist. Dies ist auch der Grund dafür, daß die Versorgungsleitungen 13 an den Endplatten 27 abgedichtet sein müssen. Die Anschlüsse 31 sind über in der Länge den Endstücken 10' entsprechende Verbindungsrohre 32 mit dem Anschlußblock 29 verbunden.

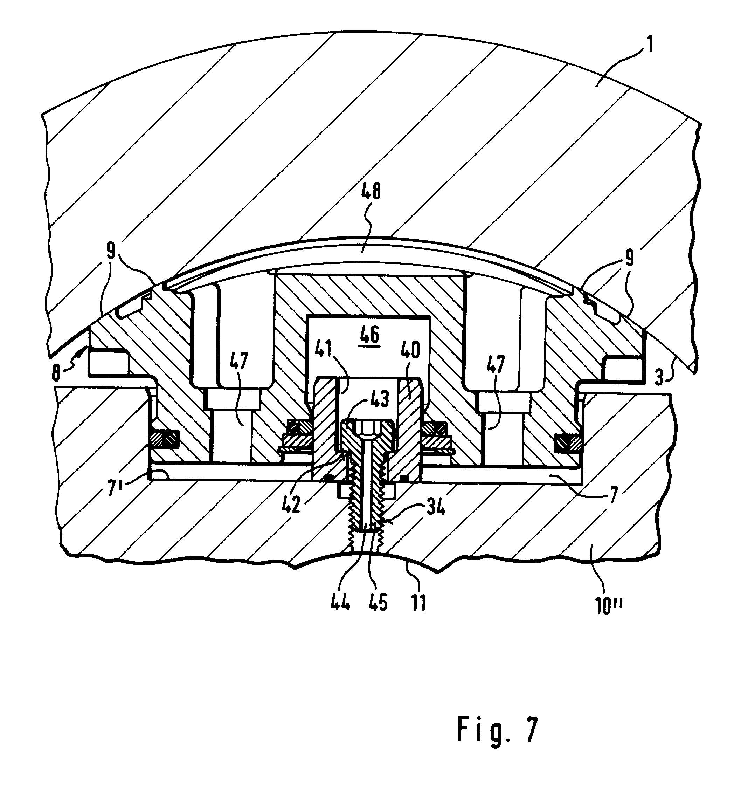

Die Druckflüssigkeit in der Längsausnehmung 11 wird über fluchtende Bohrungen 33,34 in dem Träger 30 bzw. dem Boden 7' dem jeweiligen Stützelement 8 zugeführt. Dies geschieht durch einen Kolben 40 mit einer zentralen Bohrung 41 mit einem Absatz 42 (Fig. 7), auf dem sich der Kopf 43 einer mit einer Durchgangsbohrung 44 versehenen Kopfschraube 45, die in die Bohrung 34 eingeschraubt und mittels derer der Kolben 40 auf dem Boden 7' der Ausnehmung 7 festgelegt ist. Der Kolben 40 greift in eine gegen den Kolben 40 hin offene, ansonsten geschlossene innere Zylinderkammer 46 des Stützelements 8 ein.

Der zwischen der Unterseite des Stützelements 8 und dem Boden 7' der Ausnehmung 7 verbleibende Bereich derselben steht über drosselfreie, d.h. einen großen Querschnitt aufweisende Durchlässe 47 mit der an der dem Innenumfang 3 der Hohlwalze 1 zugewandten Anlagefläche 9 des Stützelements ausgebildeten Lagertasche 48 in Verbindung, in der der hydrostatische Druck gegen den Innenumfang 3 wirkt. Die hierfür benötigte Druckflüssigkeit wird über die in Fig. 7 nicht erkennbaren Verbindungsstücke bzw. Kopfschrauben 25 den Ausnehmungen 7 zugeführt.

Der in der geschlossenen Zylinderkammer 46 herrschende Druck preßt das jeweilige Stützelement 8 an den Innenumfang 3 der Hohlwalze 1 an. Die hierfür benötigte Druckflüssigkeit gelangt über die Bohrungen 33,34 und den Kolben 40 aus der Längsausnehmung 11 des Querhaupts 10 in die Zylinderkammer 46. Der Druck ist also in den Zylinderkammern 46 aller Stützelemente 8 gleich und entspricht dem Druck in der Längsausnehmung. Alle Stützelemente 8 werden hierbei mit gleicher Kraft angepreßt.

Die ist jedoch ein Merkmal des Ausführungsbeispiels. Es wäre ebenso möglich, die Zylinderkammern 46 an die Versorgungsleitungen anzuschließen oder sowohl die Zylinderkammern 46 als auch die Lagertaschen 48 über Versorgungsleitungen zu versorgen, die in der erfindungsgemäßen Weise zu Versorgungseinheiten zusammengefaßt sind.

## Patentansprüche

1. Durchbiegungssteuerbare Walze (100),
mit einer um ihre Achse umlaufende, mit ihrer Außenumfangsfläche den arbeitenden Walzenumfang (2) bildenden Hohlwalze (1),
mit einem die Hohlwalze (1) der Länge nach durchgreifenden, an den Enden an einer äußeren Abstützung abgestützten, undrehbaren, ringsum radialen Abstand vom Innenumfang (3) der Hohlwalze (1) belassenden Querhaupt (10),
mit in einer Reihe längs des Querhaupts (10) an diesem angebrachten, mit einem fluiden Druckmedium betätigbaren Stützelementen (8)
und mit mehreren durch eine zentrale Längsausnehmung (11) des Querhaupts (10) von dessen Enden her herangeführten Versorgungsleitungen (13) zur Beaufschlagung einzelner oder mehrerer, gruppenweise gemeinsam an eine Versorgungsleitung (13) angeschlossenen Stützelementen (8) mit dem Druckmedium,
wobei die Versorgungsleitungen (13) zu einer eine in sich geschlossene Baueinheit bildenden Versorgungseinheit (20) zusammengefaßt sind, die als Ganzes in die Längsausnehmung (11) des Querhaupts (10) einschiebbar bzw. aus dieser herausziehbar ist,
**dadurch gekennzeichnet,**
daß jedes Stützelement (8) mit der zugehörigen Versorgungsleitung (13) mittels eines Verbindungsstücks (25) verbunden ist, welches einen von der Längsausnehmung (11) des Querhaupts (10) zu dem jeweiligen Stützelement (8) führenden Anschlußkanal (26) bildet und von außerhalb des Querhaupts (10) zur Herstellung bzw. zum Lösen der Verbindung betätigbar ist.

2. Walze nach Anspruch 1, **dadurch gekennzeichnet**, daß in einer nur einen kleinen Teil des Querschnitts der Längsausnehmung (11) des Querhaupts (10) einnehmender, länglicher, achsparalleler, an der den Stützelementen (8) zugewandten Wandung der Längsausnehmung (11) anliegender Träger (30) vorgesehen ist, der an den Stellen der Verbindungsstücke (25) Querbohrungen (17) aufweist, in die von der Innenseite der Längsausnehmung (11) her Winkelanschlußstücke (15) eingesetzt sind, in die die Enden der Versorgungsleitungen (13) münden.

3. Walze nach Anspruch 2, **dadurch gekennzeichnet,** daß der Träger (30) einen im wesentlichen rechteckigen Querschnitt aufweist.

4. Walze nach Anspruch 2 oder 3, **dadurch gekennzeichnet,** daß die Verbindungsstücke als längsgebohrte Schrauben (25) ausgebildet sind und von der Außenseite des Querhaupts (10) her in Gewindeabschnitte der Querbohrungen (17) eingreifen.

5. Walze nach einem der Ansprüche 2 bis 4, **dadurch gekennzeichnet,** daß die Einmündungen der Versorgungsleitungen (13) in die Winkelanschlußstücke (15) auf einer gemeinsamen Fluchtlinie (A) liegen, daß die Versorgungsleitungen (13) mit Abstand radial außerhalb der Fluchtlinie (A) verlaufen und kurz vor dem jeweils zugehörigen Winkelanschlußstück (15) in die Fluchtlinie (A) verkröpft sind.

6. Walze nach Anspruch 5, **dadurch gekennzeichnet,** daß die Verkröpfung durch Winkelstücke (19) gebildet ist.

7. Walze nach einem der Ansprüche 1 bis 6, **dadurch gekennzeichnet,** daß die Versorgungsleitungen (13) auf einem Teilkreis (14) angeordnet sind, dessen Mittelpunkt etwa im Zentrum der Längsausnehmung (11) gelegen ist.

8. Walze nach einem der Ansprüche 2 bis 7, **dadurch gekennzeichnet,** daß an mindestens einer Stelle der Versorgungseinheit (20) eine Bohrungen für die Versorgungsleitungen (13) aufweisende, mit dem Träger (30) verbundene, sich quer zu diesem erstreckende Haltescheibe (21) vorgesehen ist.

9. Walze nach einem der Ansprüche 1 bis 8, **dadurch gekennzeichnet,** daß an den Enden des Längenbereichs des Querhaupts (10), in dem die Stützelemente (8) angeordnet sind, Bohrungen für die Versorgungsleitungen (13) aufweisende Deckelplatten (27) vorgesehen sind.

10. Walze nach Anspruch 9, **dadurch gekennzeichnet,** daß die Deckelplatten (27) Anschlüsse (31) für die Zubzw. Abfuhr von fluidem Medium in bzw. aus der Längsausnehmung (11) aufweisen.

11. Walze nach Anspruch 10, **dadurch gekennzeichnet,** daß von der Längsausnehmung (11) des Querhaupts (10) ein zusätzlicher Radialkanal (33,34) zu jedem Stützelement (8) führt.

## Claims

1. A controlled-deflection roller (100),
comprising a shell (1) which rotates about its axis and which by its outer peripheral surface forms the working roller periphery (2),
comprising a non-rotatable beam (10) which extends through the length of the shell (1), is supported at the ends on an outer support and which has all round radial spacing from the inner periphery (3) of the shell (1),
comprising support elements (8) disposed in a row along and on the beam (10) and adapted to be actuated by a fluid pressure medium,
and comprising a plurality of supply lines (13) which are provided through a central longitudinal opening (11) of the beam (10) from the ends thereof, for supplying the pressure medium to individual or a plurality of support elements (8) which are connected group-wise jointly to a supply line (13),
the supply lines (13) being combined to form a supply unit (20) which forms a self-contained structural unit and which can be introduced into and removed from the longitudinal opening (11) of the beam (10) as a unit,
characterised in that
each support element (8) is connected to the associated supply line (13) by a connecting member (25) which forms a connecting duct (26) extending from the longitudinal opening (11) of the beam (10) to the associated support element (8) and which is adapted to be actuated from outside the beam (10) for the purpose of making or breaking the connection.

2. A roller according to claim 1, characterised in that an elongate axis-parallel member (30) bearing against that wall of the longitudinal opening (11) which faces the support elements is provided, said member occupying only a small part of the cross-section of the longitudinal opening (11) of the beam (10) and having, at the locations of the connecting members (25), transverse bores (17) into which are inserted from the inside of the longitudinal opening (11) angle connecting members (15) into which the ends of the supply lines (13) lead.

3. A roller according to claim 2, characterised in that the member (30) has a substantially rectangular cross-section.

4. A roller according to claim 2 or 3, characterised in that the connecting members are in the form of longitudinally drilled screws (25) and engage, from the outside of the beam (10), in screwthreaded portions of the transverse bores (17).

5. A roller according to any one of claims 2 to 4, characterised in that the orifices of the supply lines (13) leading into the angle connecting members (15) lie on a common alignment line (A), in that the supply lines (13) extend with spacing radially outside the alignment line (A) and are bent into the alignment line (A) just before the respectively associated angle connecting member (15).

6. A roller according to claim 5, characterised in that the bend is formed by angle members (19).

7. A roller according to any one of claims 1 to 6, characterised in that the supply lines (13) are disposed on a pitch circle (14) the centre of which is situated approximately in the centre of the longitudinal opening (11).

8. A roller according to any one of claims 2 to 7, characterised in that a retaining disc (21) having bores for the supply lines (13) is provided at at least one place on the supply unit (20), said retaining disc (21) being connected to the member (30) and extending transversely thereof.

9. A roller according to any one of claims 1 to 8, characterised in that cover plates (27) having bores for the supply line (13) are provided at the ends of the longitudinal zone of the beam (10) where the support elements (8) are disposed.

10. A roller according to claim 9, characterised in that the cover plates (27) have connections (31) for the supply and discharge of fluid medium to and from the longitudinal opening (11).

11. A roller according to claim 10, characterised in that an additional radial duct (33, 34) leads to each support element (8) from the longitudinal opening (11) of the beam (10).

## Revendications

1. Cylindre à flexion pouvant être contrôlée (100), dans lequel :
- la surface de travail est la surface périphérique (2) d'un cylindre creux (1) tournant autour de son axe,
- le cylindre creux (1) est traversé sur toute sa longueur par une traverse fixe (10), dont les extrémités reposent sur des appuis externes et qui laisse entre elle et la périphérie externe (3) du cylindre creux (1), un intervalle radial,
- le long de la traverse (10) et montée sur celle-ci, se trouve une série d'éléments de soutien (8) actionnés par un fluide sous pression,
- dans un évidement longitudinal central (11) de la traverse (10) et venant des extrémités de celles-ci, passent des canalisations (13) servant à alimenter en fluide sous pression des éléments de soutien (8) reliés individuellement ou à plusieurs ou en un groupe commun à une canalisation d'alimentation (13),
- les canalisations d'alimentation (13) sont réunies en une unité d'alimentation (20) formant un composant qui peut être introduit en bloc dans l'évidement (11) de la traverse (10), et retiré de même,
caractérisé en ce que
chaque élément de soutien (8) avec la conduite d'alimentation correspondante (13) est raccordé par une pièce de liaison (25) qui constitue un canal de raccordement (25) allant de l'évidement longitudinal (11) de la traverse (10) à un canal de raccordement (26) conduisant à l'élément de soutien correspondant (8) et qui peut être actionné de l'extérieur de la traverse (10) pour établir ou interrompre la liaison.

2. Cylindre selon la revendication 1,
caractérisé en ce que
dans l'évidement longitudinal (11) de la traverse (10) et n'occupant qu'une petite partie de la section de cet évidement, se trouve un support (30) longitudinal, parallèle à l'axe et en contact avec la paroi de l'évidement (11) située en face des éléments de soutien (8), ce support présentant, là où se trouvent les pièces de liaison (25), des perçages transversaux (17) dans lesquels sont emmanchés, du côté de l'intérieur de l'évidement (11), des raccords coudés (15) dans lesquels débouchent les extrémités des canalisations d'alimentation (13).

3. Cylindre selon la revendication 2,
caractérisé en ce que
le support (30) a une section sensiblement rectangulaire.

4. Cylindre selon la revendication 2 ou 3,
caractérisé en ce que
les pièces de liaison (25) sont des vis percées d'un alésage longitudinal et qui sont en prise, du côté externe de la traverse (10) dans des filetages des perçages transversaux (17).

5. Cylindre selon les revendications 2 à 4,
caractérisé en ce que
les embouchures recevant les canalisations d'alimentation (13) dans des raccords coudés (15) sont alignées sur une ligne commune (A), les canalisations (13) se trouvant décalées radialement vers l'extérieur de cette ligne (A) et coudées chacune en direction de cette ligne peu avant d'atteindre le raccord coudé (15) correspondant.

6. Cylindre selon la revendication 5,
caractérisé en ce que
le coude de retour vers la ligne est réalisé par une pièce coudée (19).

7. Cylindre selon l'une des revendications 1 à 6,
caractérisé en ce que
les canalisations d'alimentation (13) sont disposées sur un arc de cercle (14) dont le centre est situé à peu près au milieu de l'évidement longitudinal (11).

8. Cylindre selon l'une des revendications 2 à 7,
caractérisé en ce qu'
il est prévu en au moins un point de l'unité d'alimentation (20) un disque de maintien (21) disposé transversalement au support (30), relié à celui-ci et percé d'alésages pour les canalisations d'alimentation (13).

9. Cylindre selon l'une des revendications 1 à 8,
caractérisé en ce qu'
aux extrémités de la zone longitudinale de la traverse (10) où se trouvent les éléments de soutien (8), il est prévu des plaques de couverture (27) présentant des alésages pour les canalisations d'alimentation (13).

10. Cylindre selon la revendication 9,
caractérisé en ce que
les plaques de couverture (27) présentent des raccords (31) pour introduire le fluide dans l'évidement (11) et pour l'en faire sortir.

11. Cylindre selon la revendication 10,
caractérisé en ce qu'
un canal radial supplémentaire (33, 34), partant de l'évidement longitudinal (11) de la traverse (10), aboutit à chaque élément de soutien (8).
